# EUROPEAN PATENT APPLICATION

(11) **EP 4 362 429 A1**
(43) Date of publication of application: **01.05.2024**
(21) Application number: 22306607.7
(22) Date of filing: 24.10.2022
(51) Int. Cl.: H04L 67/12, H04L 67/52, H04L 67/60, G08G 1/00, G06Q 50/30, G01C 21/34

(54) **CENTRALIZED MANAGEMENT OF DATA TRANSPORT**

(71) Applicant: Telit Cinterion Deutschland GmbH, 81541 München (DE)
(72) Inventor: BREUER, Volker, 16727 BOETZOW (DE); DEMARTY, Joël, 35520 Montreuil Le Gast (FR)
(74) Representative: Pearl Cohen Zedek Latzer Baratz UK LLP

(57) **Abstract**

The present invention relates to a method to manage, in a centralized way by a data transport platform, requests from communication devices having needs for data transport between their position where data are to be picked-up and an offloading position, said data transport platform having a list of registered transport devices offering sidelink data transport resources stored with their positions. On requests from communication devices, the platform selects at least one transport device among the listed registered transport devices according to its position at the time of the request relatively to the position of the requesting communication device, sending data transport mission to selected transport device, sending information about the selected transport device to the requesting communication device. The transport device, once it has reached the pickup position activates high sidelink sensing and signal emission density according to the mission when being in proximity to an agreed pick-up position, uploads data to be transported from the requesting communication device, stores the uploaded data, offloading uploaded data once the offloading position is reached.

## Description

### FIELD OF THE INVENTION

The present invention relates to a method to manage needs of communication devices for data transport between their position and a targeted receiver of the data.

The invention also pertains to a data transport platform and to a transport device implementing the method of the invention. The invention also relates to a communication device able to request data transport of the invention.

### BACKGROUND OF THE INVENTION

Low-capability devices such as NB-IoT or Cat-M used for meters and other power sensitive low throughput applications are often difficult to reach from network and vice versa. More precisely, such devices require high power transmission. Also, due to bad propagation conditions and technical limitations, such devices have only small reception throughput.

Furthermore network throughput for such devices is limited, limited in capability and also limited according to contractual conditions. For example, a meter has only very small data volume in its normal operation. Hence, when a software upgrade or a new application software is required such data sizes, even when being differential updates, such operation can exceed the amount and often the capacity of said NB-IoT/Cat-M device. Furthermore the desired throughput may also be above the normal considered and contractual throughput for said device.

Today, devices make data transport via a traditional network path. The problem to solve is to ease data transport in a power and cost efficient way. This should apply to any kind of devices even if low-capability devices would have the highest benefit out of it.

Further alternative and advantageous solutions would, accordingly, be desirable in the art.

### SUMMARY OF THE INVENTION

The present invention aims at enabling adjustable data transmission discharge from a device having data to be transported to an offloading point in a network.

The present invention is defined, in its broadest sense, as a method to manage, in a centralized way by a data transport platform, requests from communication devices having needs for data transport between their position where data are to be picked-up and an offloading position, said data transport platform having a list of registered transport devices offering sidelink data transport resources stored with their positions,
said method comprising the steps of, at the data transport platform:
   - receiving requests from communication devices having needs for data transport including position of the communication device where data are to be picked-up and an offloading position,
   - selecting at least one transport device among the listed registered transport devices according to its position at the time of the request relatively to the position of the requesting communication device,
   - sending at least one data transport mission including a pickup position and an offloading position for the data to the at least one selected transport device,
   - sending information about the selected transport device to take over the data transport to the requesting communication device,
said method further comprising the steps of, for the transport device, once it has reached the pickup position:
   - activating high sidelink sensing and signal emission density according to the mission when being in proximity to an agreed pick-up position,
   - uploading data to be transported from the requesting communication device,
   - storing the uploaded data,
   - offloading uploaded data once the offloading position is reached.

The invention enables to manage transport of data using sidelink to transfer data to other devices around, which will transport data on behalf of the device which let the data be transfered. It enables a network offloaded traffic transport by use of sidelink in a kind of "Uber" way. Typically a transport device moving from a pickup position where the data are uploaded where no network is available will move in any case at one point of time or another towards a place where a public network will be available as soon as it moves.

It is here noted that the invention can be implemented without any movement of the transport device, typically in case of too large amount of data to be transported for an IoT requesting device. However the preferred embodiment of the invention is to use the physical movement of the transport device which is very innovative for data transport.

Compared to normal sidelink, the invention thus enables a data transport on a remarkable distance of the way to the server i.e. a geographical distance from device to network point, to be performed by non-communicative means, but using physical carry only. It necessitates provision of location updates from the transport devices to the data transport platform. The invention thus implement data transport via sidelink where data are carried physically with other devices to a distant network entry point. It reduces device throughput and enables corresponding payments/battery saving.

The present invention is a kind of sidelink-"Uber" for data. It makes the sidelink function to evolve. The new inventive method is elaborated as a data transport being offered as a service via sidelink of devices and feeding said data after physical transport into an network access point, typically an open access point. The data are transported on a remarkable part of the way in a stored transport format and being carried by other means than communication means.

The service is intended but not restricted to such network low capability throughput devices. One simple use case is picking up own meter data at home and uploading them at a public entry point to save network resources and energy for the meter device. In certain cases such as SW update for meters, the transport load/amount of data may otherwise exceed the capacity or volume ordered via the network link especially when only having a contract for typical meter load, i.e. certain amount of small reports. Hence a transport via simple sidelink from or to the device is beneficial.

The invention enables to monitor storage and forwarding of data in transport devices. It is characterized by the possibility to make a geographical remarkable part of the way for the data in a stored transport format and being carried by other devices than the requesting device.

With the method, devices having said service active and being at a certain location will activate their sidelink to transfer data to be transported. With such an "Uber" sidelink, the low end device saves energy and can be placed on a low normal data throughput contract. The seldom huge amount of data will be transported by other devices.

The invention proposes a new usage of the sidelink, i.e. any kind of device to device communication, via a centralized management of data transport, loading and offloading. The invention is distinct from other usage of sidelink which can be simple storage or forwarding via sidelink. The invention is considered to be used and promoted as an entire service.

In an advantageous use case, the invention specifically enables data transport to be performed even for devices not being in reach of a network. The invention also saves network resources by making a network bypass.

With the invention, any device having throughput above its normal average, i.e. exceeding the throughput limit or draining the battery, may thus use instead its sidelink to transport/offload said data to a device in proximity. So one of the major feature of the invention is activity steering of sidelink especially but not limited to a band being not under network control by a position match with information received by a server. Steering, i.e. increasing or decreasing sidelink activity, in dependency of a momentary position which matches to the position provided by a server is not known. Such transport devices have thus high side link sensing and signal emission density when being in proximity to an agreed pick-up place for the data as was received by the server. Hence said application influences the sidelink and sensing behaviour.

The transport devices pick up data and transport them within a certain time to a public or accessible network entry point. Giving that most of the data are non-critical communication, activities via the network can be started in case of not having received announced data or in case data which have being picked-off being declared as delivered.

In any case, the invention proposes the use of the sidelink instead of network direct uploading. It is a cost efficient and resource/cost saving alternative for transport of larger amount of data exceeding network capacity or agreed limits.

According to an advantageous feature, a common secret is provided to the requesting communication device and to the transport device with respectively the information about the selected transport device and with the data transport mission.

Such a feature of exchanging a secret enables to secure the transfer of the data between the requesting device and the transport device. Also it enables to ensure that the transport device is the correct one while entering in contact with the requesting device via sidelink. The secret is typically generated by the platform upon agreeing on transport request. Another embodiment is to maintain a master secret which can be adapted/altered for every devices being registered at the platform, taking one specific physical value of the transporting device into account. The secret is then alternatively generated by the transport device upon agreeing on the request as well as by the requesting device. The server may indicate to the requesting device which will be the transporting device and hence can also alter/adapt the secret accordingly and verify the transporting device.

According to an advantageous feature, the offloading point is a public network or an open LAN point.

Such a feature corresponds to an offloading in any point of the public network. This is very valuable for isolated devices having rare, limited in data or no connection to the network. It enables such isolated IoT devices to be able to have big amount of data transported.

According to a preferred embodiment, the method comprises a step of determination of a cost for the data transport and a step of proposing an associated price with respectively the information about the selected transport device and with the data transport mission.

Such an embodiment enables to implement an economical aspect to the data transport management according to the invention. Invoicing of the data transport service is thus implemented. It can also be used by the transport device to agree on request having a minimum volume of data to transport. It necessitates for the requesting device to be also registered with identifier at the data transport platform in the network. It also enables to manage extra payments when a maximum of volume is exceeded or any kind of invoicing for specific encountered situations. For example, a very distant offloading point would generate higher costs.

The invention also relates to a data transport platform centralizing data transport needs from communication devices, said platform having a list of available transport devices offering sidelink data transport resources stored with their positions,
said platform having a request manager receiving requests from communication devices having needs for data transport between their position where data are to be picked-up and an offloading position,
said request manager selecting at least one transport device among the listed available transport devices according to its position at the time of the request relatively to the position of the requesting communication device,
said request manager sending at least one data transport mission including a pickup position and an offloading position for the data to the at least one selected transport device,
said request manager sending information about the selected transport device to take over the data transport to the requesting device.

Such a data transport platform populates the method of the invention enabling the centralized management of outsourced data transport for requesting communication devices. The data transport platform of the invention organizes the "Uber" for data of the method of the invention.

Advantageously, data transport platform is run as a web service.

Such an implementation enables easy connection for the requesting devices as well as for transport devices. Typically applications installed in the two kinds of devices enable their connections and exchanges with the platform.

According to an advantageous feature, the platform has an availability monitor configured to monitor availability of transport devices and thus to generate the list of available transport devices.

Such an availability monitor enables the platform to centralized the calls for mission from the transport devices, keeping them stored in order to allocate missions accordingly by physical positions match with anyone of the requesting devices.

Thus advantageously, the availability monitor is configured to answer to transport devices checking the presence of data to transport at the data transport platform.

Such a functioning is favourable as working as a pull-push mode. This embodiment is however not in exclusion of other kind of management of the missions for example a passive monitoring of the availability of the transport devices in certain positions without needing them to call for missions. A passive database of transport devices can be established to implement a push mode of missions. It is here noted that a pull-push and the push mode can cohabitate in a same platform in order to optimize the functioning of the invention.

Also, advantageously, the platform is configured to monitor and store physical trajectories from the listed transport devices, enabling a physical data transport from the position of the requesting communication device and the offloading position.

Such a feature enables to monitor and to use physical displacements of the transport devices in a controlled way. The invention already uses such physical displacements by default. The method of the invention, in the broadest way, thus already concerns any kind of physical transport of data from one point to another by the transport device. Meanwhile, with the last feature, such displacements are not only used but also monitored enabling to take them into account for the determination of a best suited transport device to take over for a given request.

The invention also relates to a transport device offering sidelink data transport resources and being preliminary registered at a data transport platform of the invention, said transport device having a data transport manager configured to receive data transport missions including a pick-up position and an offloading position from the data transport platform and to activate high sidelink sensing and signal emission density according to a mission received from the data transport platform when being in proximity to an agreed pick-up position, uploading data to be transported from the requesting communication device, storing the uploaded data, offloading uploaded data once the offloading position is reached.

Such transport device in proximity which takes data to be transported needs to be registered at the platform of the invention, i.e. being trusted as transporter of data.

Typically a corresponding application adapted to influence the sidelink behaviour according to the above outlined scenarios related to transporter and offloading device.

According to an advantageous feature, said transport device is configured to regularly check the presence of data to transport at the data transport platform.

Such a feature enables the transport device to be active in the attribution of the missions. Thus the platform can push missions only to transport devices which made such check, attesting accordingly their availability.

At last the invention relates to a communication device having data transport needs for data transport between its position where data are to be picked-up and an offloading position, said communication device having access to a data transport platform of the invention to submit requests for data transport including its position where data are to be picked-up and an off loading position and to receive information about the selected transport device to connect to via sidelink in order for it to take over the data transport, said communication device being adapted to transmit data to the transport device via sidelink once it is established with the transport device.

Such a requesting device benefits of the invention as soon as it transfer data to be transported to any transport device. It is able to request data transport outsourcing at the service of the invention.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 schematically shows the context of the invention;
- Figure 2 is a flowchart of the method of the invention.

### DETAILED DESCRIPTION OF EMBODIMENTS OF THE INVENTION

For a more complete understanding of the invention, the invention will now be described in detail with reference to the accompanying drawing. The detailed description will illustrate and describe what is considered as a preferred embodiment of the invention. It should of course be understood that various modifications and changes in form or detail could readily be made without departing from the scope of the invention. It is therefore intended that the invention may not be limited to the exact form and detail shown and described herein, nor to anything less than the whole of the invention disclosed herein and as claimed hereinafter. The same elements have been designated with the same references in the different drawings. For clarity, only those elements and steps which are useful to the understanding of the present invention have been shown in the drawings and will be described.

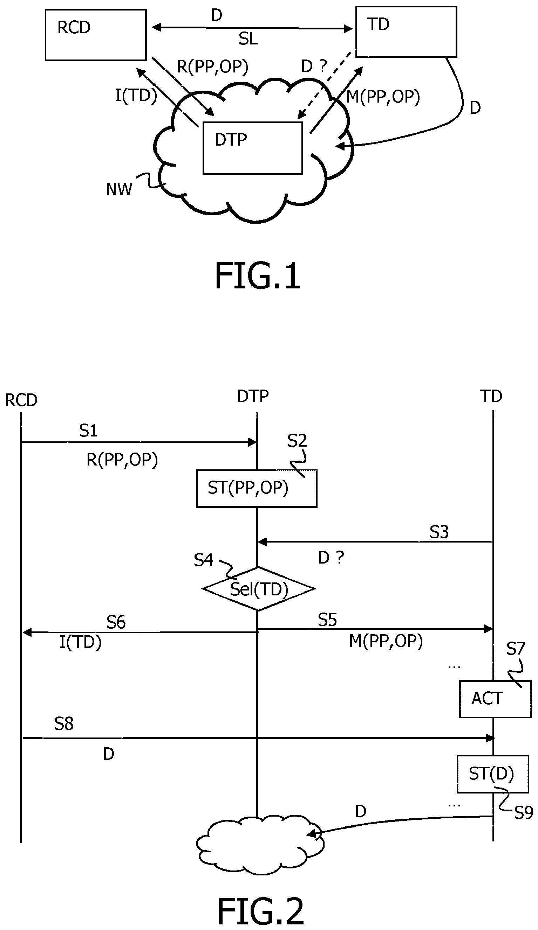

Figure 1 schematically shows the context of the invention;

A communication device RCD, typically an internet of things (IoT) device has data for transport. Such a device RCD is a low end devices which may use normally their throughput capabilities towards the network. Due to bad placement of the device RCD, the required energy for the transport may be accordingly high and correspondingly charged when exceeding the normally considered transport. Such devices need discharge for the data to be transported. This maybe because the network coverage changed, the network is in outage or it is in general in an area without coverage. Hence the device may use its sidelink and the method of the invention to transfer a message to a UE in proximity being intended to be forwarded to some specific network node including its latest position estimate. The pickup position can also be an estimate where said message was fed into the network/open LAN. More precisely, when a device communicates with a network, first the network entry point is known, which gives already a first estimate on the position depending whether it is a wide area or hot spot. Combining the Cell-Id of the injecting point with additional measurements such as AOA (angel of arrival), TA (timing advance), or even neighbour cell measurement report or general surrounding information from the requesting device may be used to further drive the position of the device. Especially for meters being deployed for a certain consumer/location which is known at least by the service provider and could be made accessible to said uber-service organizing server for position derivation of the requesting device.

The invention is a service offered to such requesting devices. Typically an application is installed on-board the requesting device to form request and manage any possible invoicing and other aspects of the invention. The application behaves as outlined to be efficient in a Uber for data scenario.

For this purpose and according to the invention, the communication device RCD has access to a data transport platform DTP. The data transport platform DTP is typically part of a network NW or connected to a network NW. It is typically a web service implemented in a server on the network NW. Such an access is typically provided via an application installed on-board the communication RCD. Other type of access can be contemplated in the implementation of the invention. In addition the invention can be implemented using various server being interconnected i.e. from the service provider owning the requesting device and the server of the transport organizing the service.

The data transport platform DTP has a list of available transport device TD available to offer sidelink SL data transport resources. Those transport devices TD are stored with their current positions. Such transport devices TD are adapted to open a sidelink SL with the requesting communication device RCD.

Transport devices TD are previously registered. It can be done via an application installed on-board of the transport devices enabling them to register as transport device. Advantageously, the transport device TD also indicates, at the time of registration, common routes done on a daily basis and extra way one would be willing to do.

Also, for example, cars on their way to work or other with communication means equipped vehicles having a pre-described and known routes can be included in said transport. They will be involved in data transport when pick-up and drop off is on said route. Such transport devices advantageously notify the service platform of any occasion triggered when being in proximity of a requesting communication device. They can also advantageously declare themselves as service devices periodically and make location update. The pickup position could also be displayed in an application of the transporting device and also indicating whether transfer for the transported data was completed and where is next pick-up location for another device or drop-off point. Hence such an application in a transporting device could also modify the route of the transporting device within certain limits to optimize the transport for multiple devices within a certain range.

By registering to the service of the invention, the transport devices can get an offer to hence reduce their own transport costs for certain transport activities whilst other transports may still need to be paid. This can be made dependent on region and distance between data pick-up and offloading point, which could also be the private LAN at home.

So transport capability and methods to overtake data are included in the profile of each transport device TD. Such a transport device TD can have a registration as professional transporter of data.

Figure 2 is a flowchart of the method of the invention.

At the beginning of the method, the communication device RCD has data to be transported from a pick-up place and a drop-off place, i.e. a public network or open LAN point.

In a step S1, it thus sends a request R(PP,OP) comprising its position PP where data are to be picked-up and an offloading position OP to a data transport platform DTP. Advantageously an amount of data to be transported is also included in the request R. Advantageously, the amount of data transported is further monitored in the platform and in the corresponding application. It can then be displayed or charged accordingly.

In a step S2, the server platform DTP stores the pick-up position PP and the offloading position OP and, if available, the amount of data to be transported.

In parallel, transport devices regularly check the presence of data as illustrated by step S3 on figure 2 and by an interrupted line on figure 1.

In a step S4, the platform DTP selects Sel(TD) at least one transport device TD to be used for data transport.

Advantageously the platform determines a best transporter for a given communication device having data to transport regarding the position of the given communication device where data have to be picked-up and the position of the offloading point.

In a step S5, the platform sends a transport mission M(PP,OP) comprising the pick up position PP and the offloading position PP. A quantity of data to be taken over is also advantageously included in the transport mission M.

Advantageously a secret or information on the transporting device which can be used in combination with a pre-known key/master to generate a secret, is also communicated at this moment in order for the later communication between the two devices to be secured.

Also an information I(TD) about the selected transport device TD to take over the data transport is sent to the requesting device RCD in a step S6. When a secret is used to secure the future communication of the data D, it is also transmitted with the information I(TD). The requesting communication device RCD and transport device TD can also exchange a secret so that the correct transport device TD is identified and back signalled to the platform DTP.

Once the transport device TD has reached the pick-up position PP, it activates high sidelink sensing and signal emission density in a step S7. The activation is thus done according to a given received request when being in proximity to the agreed pick-up position PP.

The requesting communication device RCD is for example such that it may not have its network connection and/or its sidelink always active for power saving reasons. Hence a meter device may activate its sidelink upon presence or touch by another device and hence not even have a network connection active when the transport device is coming.

There may also be a class of meter or sensors which collect data longtime and do not even have a network subscription connection active. Hence they may also activate their sidelink upon touch or presence detection of a transporter.

In a step S8, data D are then uploaded by the transport device TD directly from the requesting communication device RCD using sidelink SL between the two devices. This uploading of data D is advantageously made using a secret or credentials.

The transport device TD then stores the data D in a step S9. Once it is in proximity to the agreed offloading position OP, it offloads the data D to the offloading point. Typically this point is in a public network or is an open LAN point. The transport device TD has thus simply moved geographically to an open network point. In case the transport device TD has flat rate also direct communication with the network NW may be used to offload data D.

If ever needed, the transport device TD can again activate sidelink and sensing to use the sidelink to offload the data D to the offloading point.

In this case, the targeted communication device, typically an IoT device, is informed of the transport device presence. Advantageously, credentials or secret are here also used to secure the communication of the data D. The targeted loT device in the network NW thus receives data via sidelink.

Once data D are received by the appropriate server or device in the network, the transporter device is informed of successful delivery. It triggers new checking of the presence of data to be transported in the vicinity of the transport device TD.

Once data are delivered the transport device TD may move directly or within a given time limit towards a free network access point.

The transport is typically paid by the requesting communication device RCD or their owners which need to have this network offload traffic transport. It can be implemented that a share is for the service provider and roaming part is for the requesting communication device or its owner who agreed on the transport. The invention can thus enables to make money on the by-pass.

The invention proposes a kind of "Uber" for data. "Uber" as a person transport means is widely known, deployed and used. According to this system, private persons being registered at a platform offer transport means for persons alongside taxis and public transportation. The invention applies in a totally distinct field where such a principle is totally unknown.

The following advantages are thus provided by the invention. The invention enables large amount of data transport in an efficient way for low end devices with limited traffic capabilities via the public network. Such a limitation can be either by the power that would need to be spend, typically when placed indoor, or traffic volume exceeding the agreed transport volume with the MNO. The network traffic offloading of the invention solves these limitations. The invention further allows users to benefit from their daily activities, i.e. transporting data from their home meter to public network entry points or on their way to work. The overall procedure saves electricity and network resources placing them in areas where efficiently needed.

Besides, the invention enables people to earn money by offering data transport at the "Uber" for data platform. For the people being less interested in gaining money, it encourages people save energy and doing some support to others. In parallel, there can also be registration as professional transporter according to the invention. Typically, in such a case, such transporter will be cheaper than service team member for transporting larger amount of data to or from a certain communication equipment.

In the above detailed description, reference is made to the accompanying drawings that show, by way of illustration, specific embodiments in which the invention may be practiced. These embodiments are described in sufficient detail to enable those skilled in the art to practice the invention. The above detailed description is, therefore, not to be taken in a limiting sense, and the scope of the present invention is defined only by the appended claims, appropriately interpreted.

## Claims

1. Method to manage, in a centralized way by a data transport platform, requests from communication devices having needs for data transport between their position where data are to be picked-up and an offloading position, said data transport platform having a list of registered transport devices offering sidelink data transport resources stored with their positions,
said method comprising the steps of, at the data transport platform:
- receiving requests from communication devices having needs for data transport including position of the communication device where data are to be picked-up and an offloading position,
- selecting at least one transport device among the listed registered transport devices according to its position at the time of the request relatively to the position of the requesting communication device,
- sending at least one data transport mission including a pickup position and an offloading position for the data to the at least one selected transport device,
- sending information about the selected transport device to take over the data transport to the requesting communication device,
said method further comprising the steps of, for the transport device, once it has reached the pickup position:
- activating high sidelink sensing and signal emission density according to the mission when being in proximity to an agreed pick-up position,
- uploading data to be transported from the requesting communication device,
- storing the uploaded data,
- offloading uploaded data once the offloading position is reached.

2. Method according to claim 1, wherein a common secret is provided to the requesting communication device and to the transport device with respectively the information about the selected transport device and with the data transport mission.

3. Method according to one of preceding claims, wherein the offloading point is a public network or an open LAN point.

4. Method according to one of the preceding claims, said method comprising a step of determination of a cost for the data transport and a step of proposing an associated price with respectively the information about the selected transport device and with the data transport mission.

5. Data transport platform centralizing data transport needs from communication devices, said platform having a list of registered transport devices offering sidelink data transport resources stored with their positions,
said platform having a request manager receiving requests from communication devices having needs for data transport between their position where data are to be picked-up and an offloading position,
said request manager selecting at least one transport device among the listed registered transport devices according to its position at the time of the request relatively to the position of the requesting communication device,
said request manager sending at least one data transport mission including a pickup position and an offloading position for the data to the at least one selected transport device,
said request manager sending information about the selected transport device to take over the data transport to the requesting device.

6. Data transport platform according to claim 5, said data transport platform being run as a web service.

7. Data transport platform according to one of claims 4 and 5, said data transport platform having an availability monitor configured to monitor availability of transport devices and thus to generate the list of available transport devices.

8. Data transport platform according to one of claims 5 to 7, wherein the availability monitor is configured to answer to transport devices checking the presence of data to transport at the data transport platform.

9. Data transport platform as claimed in one of claims 5 to 8, wherein the platform is configured to monitor and store physical trajectories from the listed transport devices, enabling a physical data transport from the position of the requesting communication device and the offloading position.

10. Transport device offering sidelink data transport resources and being preliminary registered at a data transport platform of one of claims 5 to 9, said transport device having a data transport manager configured to receive data transport missions including a pick-up position and an offloading position from the data transport platform and to activate high sidelink sensing and signal emission density according to a mission received from the data transport platform when being in proximity to an agreed pick-up position, uploading data to be transported from the requesting communication device, storing the uploaded data, offloading uploaded data once the offloading position is reached.

11. Transport device as claimed in claim 10, said transport device being configured to regularly check the presence of data to transport at the data transport platform.

12. Communication device having data transport needs for data transport between its position where data are to be picked-up and an offloading position, said communication device having access to a data transport platform of one of claims 5 to 9, to submit requests for data transport including its position where data are to be picked-up and an off loading position and to receive information about the selected transport device to connect to via sidelink in order for it to take over the data transport, said communication device being adapted to transmit data to the transport device via sidelink once it is established with the transport device.
